# EUROPÄISCHE PATENTSCHRIFT

(11) **EP 2 857 593 B1**
(45) Veröffentlichungstag und Bekanntmachung des Hinweises auf die Patenterteilung: **28.12.2016**
(21) Anmeldenummer: 14184211.2
(22) Anmeldetag: 10.09.2014
(51) Int. Cl.: A01B 63/108, E02F 3/627, E02F 9/22, A01B 63/10, B62D 49/06, F15B 1/02, E02F 3/36, E02F 3/43

(54) **FRONTLADERANORDNUNG**
FRONT LOADER ASSEMBLY
SYSTÈME DE CHARGEUR FRONTAL

(30) Priorität: 01.10.2013 DE 102013219936
(43) Veröffentlichungstag der Anmeldung: 08.04.2015
(73) Patentinhaber: Deere & Company, Moline, IL 61265 (US)
(72) Erfinder: Faivre, Damien, 70100 Apremont (FR); Betrand, Hugues, 70190 Rioz (FR); Villarreal, Diego Adrian, 67173 La Silla (MX)
(74) Vertreter: Reichert, Christian

(56) Entgegenhaltungen:
- EP-A2- 1 813 730
- EP-A2- 2 239 467
- WO-A1-2004/071929
- WO-A1-2009/067052
- DE-A1-102010 043 135
- DE-B- 1 294 895
- NL-A- 7 600 034
- US-B1- 6 386 821

## Beschreibung

Die Erfindung betrifft eine Frontladeranordnung mit einem Anbaurahmen und einem Anbaumast, wobei der Anbaumast an den Anbaurahmen ankoppelbar und von dieser abkoppelbar ist, eine mit dem Anbaumast verbundene Laderschwinge, welche über einen sich zwischen Laderschwinge und Anbaumast erstreckenden Hydraulikzylinder verschwenkbar ist

Frontladeranordnungen, d.h. die Anordnung eines Frontladers an einem Fahrzeug, insbesondere an einem landwirtschaftlichen Fahrzeug, oder auch an einer anderen Art von Nutzfahrzeug, sind bekannt. So können Frontlader mittels eines Anbaurahmens an ein Fahrzeug, beispielsweise an einen Traktor oder einen landwirtschaftlichen Schlepper, angeschlossen bzw. angebaut werden, um Laderarbeiten auszuführen. Der Anbaurahmen wird üblicherweise an den Fahrzeugrahmen geschraubt bzw. ist an diesem befestigt. Der Frontlader selbst verfügt über eine Anschluss- bzw. Anbaustelle oder Anbaumast, die an die Konsole angeschlossen bzw. angebaut bzw. angelenkt wird. Diesbezüglich sind verschiedene Möglichkeiten bekannt. So weisen einige bekannte Ausführungsbeispiele für Frontladeranordnungen Mechanismen auf, die zwei an der Konsole ausgebildete Fanghaken vorsehen, welche zur Aufnahme von zwei an der Mastanordnung des Frontladers ausgebildeten Lagerbolzen dienen, wobei wenigstens einer der Fanghaken nach der Aufnahme der Lagerbolzen verriegelt wird. Die Aufnahme der Lagerbolzen erfolgt dabei durch Heranführen des Anbaurahmens bzw. Heranfahren des Fahrzeugs an den Anbaumast bzw. an den Frontlader, welcher sich in entsprechender Parkstellung bzw. Anbaustellung befindet. Nach Aufnahme der Lagerbolzen kann die Verriegelung der Fanghaken manuell oder auch teilautomatisiert bzw. vollautomatisiert bzw. fremdmotorisch bzw. ferngesteuert erfolgen. Andere Mechanismen sehen vor, dass die Konsole nur einen Fanghaken aufweist, der zur Aufnahme eines an der Mastanordnung ausgebildeten Lagerbolzens dient. Zur Verriegelung sind dann an Anbaurahmen und Anbaumast jeweils Verbindungsöffnungen ausgebildet, welche, zueinander in Flucht gebracht, über einen Verriegelungsbolzen miteinander verbunden werden bzw. durch welche ein Verriegelungsbolzen geführt wird. Auch hier kann die Verriegelung manuell oder auch teilautomatisiert bzw. vollautomatisiert bzw. fremdmotorisch bzw. ferngesteuert erfolgen.

Eine derartige teilautomatisierte Verriegelung offenbart die US 2007/0059147 A1, in der eine Frontladeranordnung vorgestellt wird, die einen federvorgespannten Verriegelungsbolzen umfasst, welcher über an einem Anbaumast und an einem Anbaurahmen ausgebildete Stellelemente betätigbar ist, indem die Stellelemente durch Relativbewegung zueinander eine Verriegelung auslösen, derart, dass der Verriegelungsbolzen durch Federkraft in an dem Anbaumast und an dem Anbaurahmen der Frontladeranordnung ausgebildete Verbindungsöffnungen geführt wird. Zum Entriegeln muss der Verriegelungsbolzen entgegen der Federkraft manuell aus den Verbindungsöffnungen herausgeführt und die Stellelemente in eine entsprechende Entriegelungsstellung gebracht werden. Nachteilig wirkt sich hierbei aus, dass insbesondere die Ausbildung und Anordnung des an der Mastanordnung ausgebildeten Stellelements, sowie dessen Verbindung mit dem Verriegelungsbolzen einen relativ komplexen Fertigungs- und Montageaufwand erfordern.

Ferner offenbart die NL 7600034 eine Frontladersystem, welches einen mit einem Hydraulikspeicher verbundenen, doppeltwirkenden Hydraulikzylinder zum Heben und Senken einer Frontladeranordnung offenbart. Der Hydraulikzylinder und der Hydraulikspeicher sind über einen hydraulisch gesteuerten Ventilblock miteinander verbunden. Nachteilig ist hier, dass der Hydraulikblock nur in Verbindung mit einer hydraulischen Versorgung steuerbar ist.

Ferner offenbart die EP 1 774 106 B1 eine Frontladeranordnung, bei der der Anbaumast über eine am Anbaurahmen ausgebildete Rampe geführt wird, wobei am Anbaurahmen Fanghaken ausgebildet sind, in die am Anbaumast ausgebildete Lagerbolzen aufgenommen werden. Über einen federvorgespannten Verriegelungsschnapper, der in eine an der Rampe ausgebildete erste und dann zweite Vertiefung eingreift, kann die Frontladeranordnung verriegelt werden, wobei hier eine Vorverriegelung ausgebildet ist, in der der Verriegelungsschnapper in die erste Vertiefung eingreift und der Anbaumast noch relativ zum Anbaurahmen bewegbar ist, bis dieser seine Endstellung erreicht, in der die Lagerbolzen vollständig in die Fanghaken eingeführt worden sind. Erst dann schnappt der Verriegelungsschnapper in die zweite Vertiefung ein, mit der sich eine Endverriegelung einstellt. Nachteilig wirkt sich hier aus, dass zum einen die Ausbildung und Anordnung des am Anbaumast vorgesehenen Verriegelungsschnappers und ferner die am Anbaurahmen ausgebildete erste und zweite Vertiefung zur Vor- bzw. Endverriegelung einen relativ komplexen Fertigungs- und Montageaufwand, sowie eine hohe Teilevielfalt erfordern.

Die der Erfindung zugrunde liegende Aufgabe wird darin gesehen, eine Frontladeranordnung der eingangs genannten Art anzugeben, durch welche ein oder mehrere der vorgenannten Nachteile überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Frontladeranordnung der eingangs genannten Art derart ausgebildet, dass an der Frontladeranordnung Stellmittel vorgesehen sind, durch welche der Hydraulikzylinder bei abgekoppelter hydraulischer Versorgung in eine Schwimmstellung bringbar ist. Dadurch, dass der Hydraulikzylinder in eine Schwimmstellung gebracht wird, kann sich der Anbaumast relativ frei bewegen und wird nicht, wie sonst üblich beim Ankoppeln, durch den Hydraulikzylinder blockiert, da eine Hydraulikverbindung zwischen Fahrzeug und Frontladeranordnung beim Abkoppeln getrennt wurde und beim Ankoppeln erst von einer Bedienperson in einem weiteren Schritt getätigt werden kann, wenn der Anbaumast an den Anbaurahmen gekoppelt wurde. Der Anbaurahmen kann beispielsweise eine Rampe umfassen, auf der der Anbaumast zum An- und Abkoppeln verschiebbar geführt wird. Durch die Schwimmstellung kann der Anbaumast um seinen Anlenkpunkt zur Laderschwinge, also relativ zur Lagerschwinge, verschwenkt werden und sich beispielsweise beim Ankoppeln einem Anstellwinkel zum Anbaurahmen anpassen bzw. zu diesem ausgerichtet werden. Ein Ausrichten erfolgt dabei dadurch, dass die Lagerbolzen des Anbaumasts beim Ankoppeln über die Rampe gleiten und in die Fanghaken geführt werden, wobei durch diese Wechselwirkung die Lagerbolzen in ihre zum Ankoppeln vorgesehene Stellung bzw. Position gebracht werden. Ohne der genannten Schwimmstellung am Hydraulikzylinder würde der Anbaumast in einer starren Verbindung zur Laderschwinge stehen, so dass der Anbaumast keine Schwenkbewegungen relativ zur Laderschwinge ausüben kann. Sollten sich also während einer Zeit, in der die Frontladeranordnung vom Fahrzeug abgekoppelt war, die geometrischen Abmessungen zwischen Fahrzeug und Frontladeranordnung geändert haben, was durchaus die Regel darstellt, beispielsweise aufgrund Standortinstabilitäten (Bodenunebenheiten, Absacken des Bodens etc.), Änderung der Befüllung der Reifen des Fahrzeugs, Änderungen der Reifengröße, Leckagen an der Hydraulik der Frontladereinrichtung oder aufgrund anderer Umstände, dann ist damit in der Regel auch eine Veränderung des Anstellwinkels des Anbaumasts zum Anbaurahmen verbunden, wodurch das nächste Ankoppeln der Frontladeranordnung erheblich erschwert wird, da aufgrund der starren Verbindung zwischen Anbaumast und Laderschwinge, die gesamte Frontladeranordnung (der Anbaurahmen ausgenommen) angehoben, verschoben, abgesenkt, gekippt etc. und damit auch das gesamte Gewicht der Frontladeranordnung bewegt werden muss, bis sich der Anbaumast entsprechend dem Anbaurahmen ausgerichtet hat.

Die Stellmittel können einen Hydraulikspeicher und ein manuell betätigbares Absperrventil umfassen, über welches der Hydraulikzylinder hydraulisch mit dem Hydraulikspeicher verbindbar ist. Durch Öffnen des Absperrventils kann der Hydraulikspeicher mit einer kolbenbodenseitigen Kammer eines einseitig wirkenden Hydraulikzylinders hydraulisch verbunden werden (wobei die kolbenbodenseitige Kammer die Hubkammer darstellt), so dass Hydrauliköl aus dem Hydraulikzylinder in den Hydraulikspeicher und umgekehrt fließen und sich der Kolben im Hydraulikzylinder und die mit dem Kolben verbundene Kolbenstange frei bewegen kann. Dadurch kann sich auch der Anbaumast, wie oben bereits beschrieben, relativ frei bewegen bzw. frei verschwenkt bzw. ausgerichtet werden. Das Absperrventil wird vorzugsweise direkt nach dem Abkoppeln des Frontladers vom Fahrzeug, bei dem auch üblicherweise eine Hydraulikversorgung vom Fahrzeug für die Hydraulikzylinder der Frontladeranordnung (Betriebshydraulik) unterbrochen bzw. abgekoppelt wird, geöffnet, wodurch der Hydraulikzylinder bereits in Schwimmstellung gehalten wird und für das nächste Ankoppeln vorbereitet ist. Das Öffnen des Absperrventils kann selbstverständlich auch erst unmittelbar vor dem nächsten Ankoppeln erfolgen. Ein manuelles Öffnen kann hier zwar vorgesehen sein, dies soll jedoch nur gewährleisten, dass das Einstellen der Schwimmstellung für den Hydraulikzylinder unabhängig von der Fahrzeughydraulik bzw. von einer Betriebshydraulik für die Frontladeranordnung erfolgen kann. Es ist durchaus denkbar hier auch eine mechanische oder elektrische Vorrichtung zum Öffnen des Absperrventils vorzusehen, sofern diese unabhängig von der Betriebshydraulik des Frontladers betreibbar ist bzw. unabhängig von einer Betriebshydraulik das Öffnen des Absperrventils gewährleistet, d.h. das Öffnen des Absperrventils veranlasst, wenn eine Verbindung zur Betriebshydraulik unterbrochen wird.

Ergänzend zu der oben angeführten Ausbildung des Hydraulikzylinders kann dieser auch doppeltwirkend mit einer kolbenstangenseitigen und einer kolbenbodenseitigen Kammer ausgebildet sein, wobei das Absperrventil zwischen den beiden Kammern und der Hydraulikspeicher zwischen dem Absperrventil und der kolbenstangenseitigen Kammer angeordnet ist. Durch Öffnen des Absperrventils werden die beiden Kammern kurzgeschlossen, wobei eine Schwimmstellung für den Hydraulikzylinder erzielt wird, wobei die Volumenunterschiede bzw. die Querschnittsunterschiede der beiden Kammern durch den Hydraulikspeicher kompensiert werden. Dadurch kann sich auch hier der Anbaumast, wie oben bereits beschrieben, relativ frei bewegen bzw. frei verschwenkt bzw. ausgerichtet werden. Das Absperrventil wird auch hier vorzugsweise direkt nach dem Abkoppeln des Frontladers vom Fahrzeug, geöffnet, wodurch der Hydraulikzylinder bereits in Schwimmstellung gehalten wird und für das nächste Ankoppeln vorbereitet ist. Das Öffnen des Absperrventils kann selbstverständlich auch erst unmittelbar vor dem nächsten Ankoppeln erfolgen. Ein manuelles Öffnen kann hier zwar vorgesehen sein, dies soll jedoch nur gewährleisten, dass das Einstellen der Schwimmstellung für den Hydraulikzylinder unabhängig von der Fahrzeughydraulik bzw. von einer Betriebshydraulik für die Frontladeranordnung erfolgen kann. Es ist durchaus denkbar hier auch eine mechanische oder elektrische Vorrichtung zum Öffnen des Absperrventils vorzusehen, sofern diese unabhängig von der Betriebshydraulik des Frontladers betreibbar ist bzw. unabhängig von einer Betriebshydraulik das Öffnen des Absperrventils gewährleistet, d.h. das Öffnen des Absperrventils veranlasst, wenn eine Verbindung zur Betriebshydraulik unterbrochen wird.

Die oben beschriebene Frontladeranordnung kann an verschiedenartigen Trägerfahrzeugen zum Einsatz kommen, insbesondere jedoch an landwirtschaftlichen Fahrzeugen wie Schlepper oder Traktoren.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Seitenansicht eines landwirtschaftlichen Fahrzeugs mit einer Frontladeranordnung,
- Fig. 2: eine schematische Seitenansicht eines Anbaumasts im Querschnitt und eines Anbaurahmens der Frontladeranordnung aus Figur 1 in einem abgekoppelten Zustand,
- Fig. 3: eine weitere schematische Seitenansicht des Anbaumasts und des Anbaurahmens aus Figur 2 in einem ersten Ankoppelzustand,
- Fig. 4: eine weitere schematische Seitenansicht des Anbaumasts und des Anbaurahmens aus Figur 2 und 3 in einem weiteren Ankoppelzustand,
- Fig. 5: eine weitere schematische Seitenansicht des Anbaumasts und des Anbaurahmens aus Figur 2 bis 4 in einem angekoppelten Zustand,
- Fig. 6: eine weitere schematische Seitenansicht des Anbaumasts und des Anbaurahmens aus Figur 2 bis 5 in einem ersten Abkoppelzustand,
- Fig. 7: eine weitere schematische Seitenansicht des Anbaumasts und des Anbaurahmens aus Figur 2 bis 6 in einem weiteren Abkoppelzustand,
- Fig. 8: eine weitere schematische Seitenansicht des Anbaumasts und des Anbaurahmens aus Figur 2 bis 7 in einem abgekoppelten Zustand,
- Fig. 9: eine perspektivische Seitenansicht des Schwenkhebels des Anbaumasts aus den Figuren 2 bis 8,
- Fig. 10: eine perspektivische Seitenansicht der Betätigungseinrichtung für den Schwenkriegel des Anbaumasts aus den Figuren 2 bis 8,
- Fig. 11: ein schematisches Hydraulikschaubild für eine Frontladeranordnung mit einfach wirkenden Hydraulikzylindern und
- Fig. 12: ein schematisches Hydraulikschaubild für eine Frontladeranordnung mit doppelt wirkenden Hydraulikzylindern.

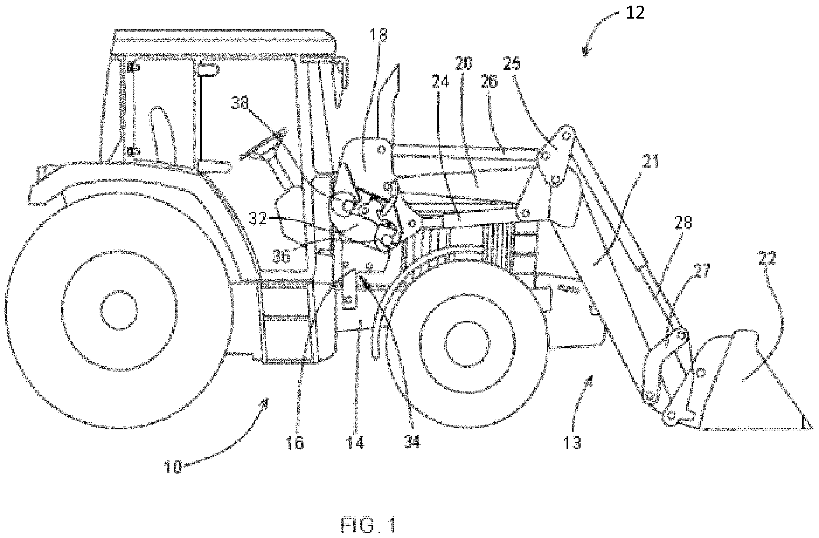

In Figur 1 ist ein landwirtschaftliches Fahrzeug in Form eines Schleppers 10 (Trägerfahrzeug) dargestellt. Der Schlepper 10 verfügt über eine angebaute Frontladeranordnung 12. Die Frontladeranordnung 12 umfasst einen Frontlader 13, sowie beidseitig des Schleppers 10 an einem Fahrzeugrahmen 14 des Schleppers 12 angebaute Anbaurahmen 16 zum Ankoppeln des Frontladers 13. Der Frontlader 13 weist ebenfalls beidseitig des Schleppers einen Anbaumast 18 auf, mittels welchen der Frontlader 13 an den Anbaurahmen 16 der Frontladeranordnung 12 und damit an den Schlepper 10 angekoppelt wird.

Die Frontladeranordnung 12 bzw. der Frontlader 13 weist eine schwenkbar an den Anbaumasten 18 befestigte Frontladerschwinge 20 auf, an die sich ein schwenkbares Frontladerwerkzeug 22 anschließt. Die Frontladerschwinge 20 erstreckt sich beidseitig des Schleppers und umfasst beidseitig des Schleppers 10 parallel verlaufende Träger 21, die über einen oder mehrere Querträger (nicht gezeigt) miteinander verbunden sind. Das Frontladerwerkzeug 22 ist beispielhaft in Form einer Ladeschaufel ausgebildet, wobei das Frontladerwerkzeug 22 auch als Ladegabel, Greifer etc. ausgebildet sein könnte. Die Frontladerschwinge 20 ist über hydraulische Hubzylinder 24, die sich beidseitig des Schleppers 10 zwischen den jeweiligen Anbaumasten 18 und der Frontladerschwinge 20 erstrecken, verschwenkbar. Zwischen beidseitig der Frontladerschwinge 20 mit dieser verbundene Lenker 25 und den jeweiligen Anbaumasten 18 erstreckt sich jeweils ein Lenkgestänge 26, welches zur Parallelführung des Frontladerwerkzeugs 22 dient. Das Frontladerwerkzeug 22 ist beidseitig der Frontladerschwinge 20 über ein mit der Frontladerschwinge 20 und dem Frontladerwerkzeug 22 verbundenes Schwenkgestänge 27, sowie über einen mit dem jeweiligen Schwenkgestänge 27 und dem jeweiligen Lenker 25 verbundenen hydraulischen Schwenkzylinder 28 verschwenkbar.

Der Anbaurahmen 16 weist einen Aufnahmebereich 32 zur Aufnahme bzw. Ankopplung des Anbaumasts 18 sowie einen Befestigungsbereich 34 zur Befestigung des Anbaurahmens 16 an den Fahrzeugrahmen 14 auf. Am Befestigungsbereich 34 ist der Anbaurahmen 16 über Schraubverbindungen (nicht gezeigt) an den Fahrzeugrahmen 14 angeschraubt. Der Anbaurahmen 16 weist an einem unteren Bereich des Aufnahmebereichs 32 einen ersten Fanghaken 36 und an einem oberen Bereich des Aufnahmebereichs 32 einen zweiten Fanghaken 38 bzw. jeweils hakenförmige Lagerstellen auf.

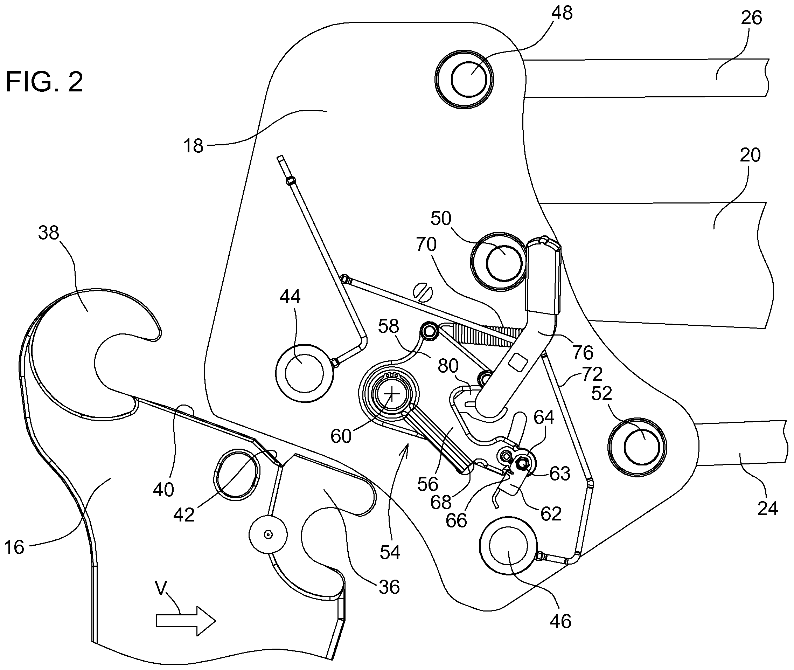

In den Figuren 2 bis 8 ist eine jeweilige Kombination aus Anbaumast 18 und Anbaurahmen 16 der Frontladeranordnung 12 vergrößert in mehreren Seitenansichten bzw. in mehreren Querschnittsansichten dargestellt, in den weitere Einzelheiten der Frontladeranordnung 12 im Detail dargestellt sind.

Der Anbaurahmen 16 weist eine Rampe 40 oder rampenförmige Ausgestaltung auf, die sich zwischen den beiden Fanghaken 36, 38 erstreckt und im unteren Bereich, ausgehend vom oberen Fanghaken 38 entlang der Rampe 40, unmittelbar vor dem unteren Fanghaken 36 eine Vertiefung 42 oder Einkerbung umfasst.

Der Anbaumast 18 umfasst eine obere und untere Lagerstelle in Form von einem oberen Lagerbolzen 44 sowie einem unteren Lagerbolzen 46. Hierbei ist es denkbar, dass die Kombination von Fanghaken 36, 38 und Lagerbolzen 44, 46 auch auf umgekehrte Weise ausführbar ist, so dass die Lagerbolzen 44, 46 am Anbaurahmen 16 und die Fanghaken 36, 38 am Anbaumast 18 ausgebildet sind. Am Anbaumast 18 sind ferner ein oberer, ein mittlerer und ein unterer Schwenkbolzen 48, 50, 52 angeordnet, die das Lenkgestänge 26, die Frontladerschwinge 20, sowie den Hydraulikzylinder 24 jeweils schwenkbar mit dem Anbaumast 18 verbinden.

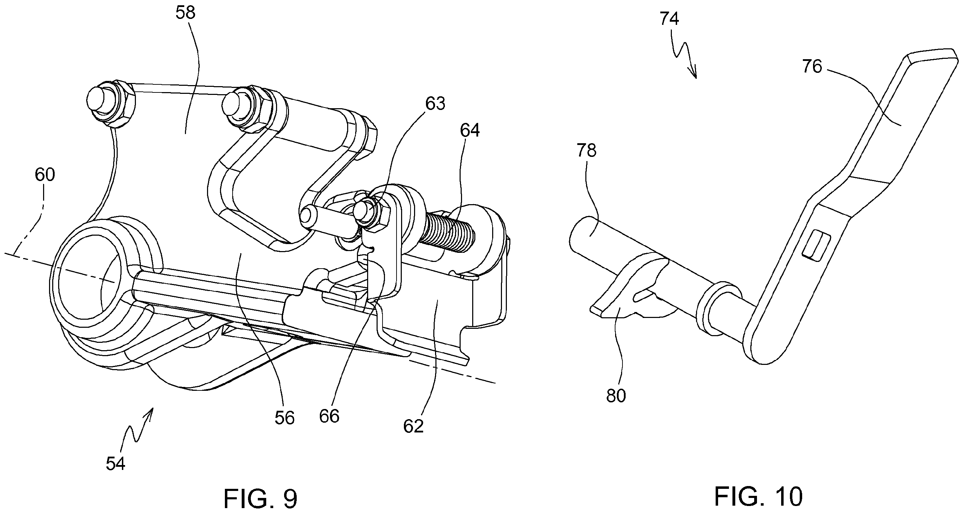

Der Anbaumast 18 umfasst ferner einen Schwenkriegel 54, der einen ersten Schwenkarm 56 und einen zweiten Schwenkarm 58 aufweist und um eine Schwenkachse 60 verschwenkbar gelagert ist (siehe auch Figur 9). An dem freien Ende des ersten Schwenkarms 56 ist ein Stellmittel in Form eines Stützmittels 62 angeordnet, welches in Form eines Stützscharniers ausgebildet ist. Das Stützmittel 62 ist am Ende des ersten Schwenkarms 56 mittels eines Gelenks 63 schwenkbar angelenkt und mittels einer Spiralfeder 64 derart vorgespannt, dass es gegen das Ende des ersten Schwenkarms 56 gepresst bzw. gedrückt oder gedrängt wird und in einer Extremstellung am Ende des Schwenkarms 56 bzw. an einer dort ausgebildeten Stirnfläche 66 zur Anlage kommt. Die Unterseite des ersten Schwenkarms 56, also die der Rampe 40 zugekehrte Seite des Schwenkarms 56, weist einen Absatz 68 auf, der komplementär zu der auf der Rampe 40 ausgebildeten Vertiefung 42 geformt ist.

Der zweite Schwenkarm 58 des Schwenkriegels 54 ist kürzer ausgebildet und oberhalb des ersten Schwenkarms 56, in einem Winkel um ca. 70° versetzt, angeordnet (in den Figuren entgegen dem Uhrzeigersinn) und bildet neben dem ersten Schwenkarm 56 einen weiteren Hebelarm um die Schwenkachse 60 des Schwenkriegels 54. Der zweite Schwenkarm 58 ist über eine Spannfeder 70 mit einem Rahmenteil 72 des Anbaumasts 18 verbunden, so dass eine Vorspannung des Schwenkriegels 54 in Richtung zur Rampe 40 erzeugt wird.

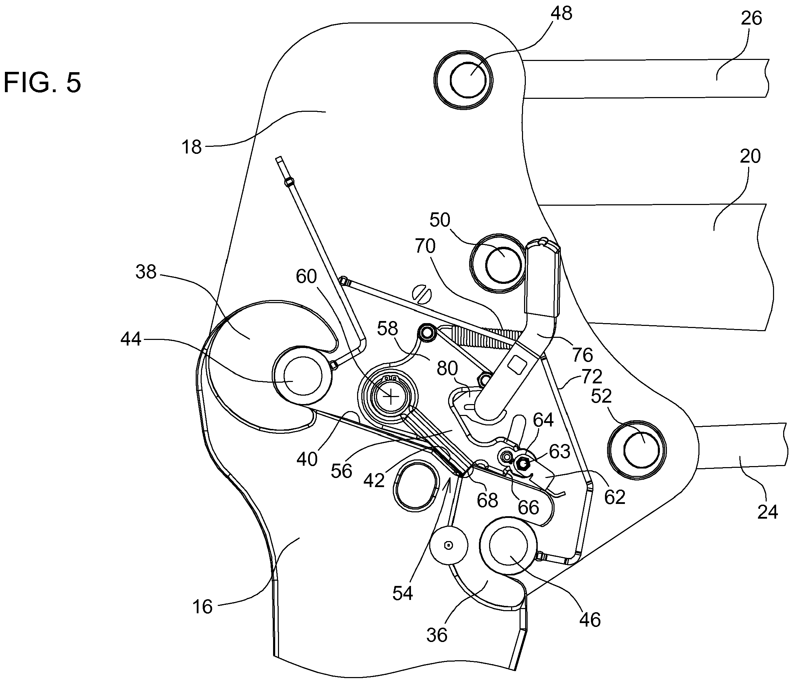

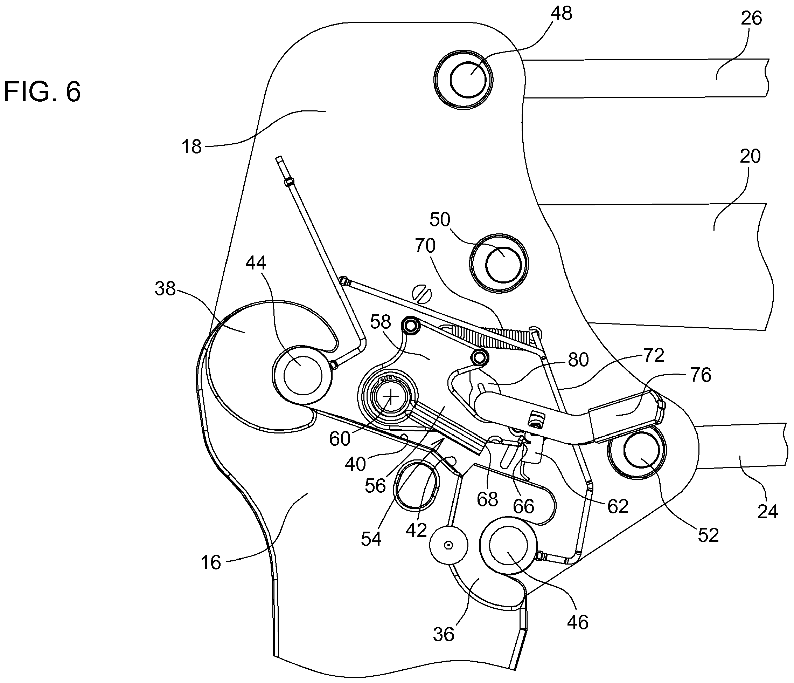

Zwischen dem ersten und dem zweiten Schwenkarm 56, 58 ist ein Betätigungselement 74 angeordnet (siehe Figur 10), über welches der Schwenkriegel 54 betätigbar ist. Das Betätigungselement 74 weist einen Betätigungshebel 76 auf, der an der Außenseite des Anbaumasts 18 zugänglich ist und sich von einer Welle 78 radial erstreckt. Die Welle 78 ist zwischen den beiden Schwenkarmen 56, 58 drehbar am Anabaumast 18 gelagert. In einem mittleren Bereich der Welle 78 ist ein Stellarm 80 ausgebildet, der sich von der Welle 78 radial erstreckt und derart ausgebildet und angeordnet ist, dass er durch Verdrehen der Welle 78 mit dem zweiten Schwenkarm 58 des Schwenkriegels 54 in Eingriff bringbar ist und diesen aushebeln bzw. in eine Schwenkbewegung versetzen kann. Die Welle wird dabei durch Verschwenken des Betätigungshebels 76 aus einer Grundstellung (Figuren 2 bis 5, 7 und 8) in eine Eingriffsstellung (entsprechend Figur 6) in Drehung versetzt, woraufhin der Stellarm 80 ebenfalls verschwenkt und mit dem oberen Schwenkarm 58 und damit mit dem Schwenkriegel 54 in Eingriff gebracht wird und der Schwenkriegel 54 aus einer Verriegelungsstellung (siehe Figur 5) in eine Entriegelungsstellung (siehe Figur 6) bewegt werden kann. Durch Zurückverschwenken wird der Schwenkarm 58 und damit auch der Schwenkriegel 54 wieder frei gegeben.

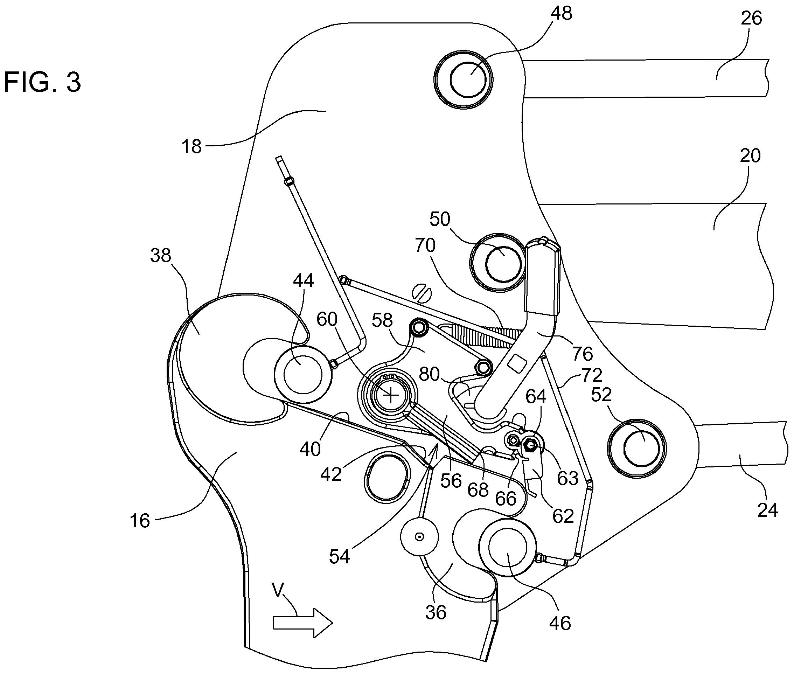

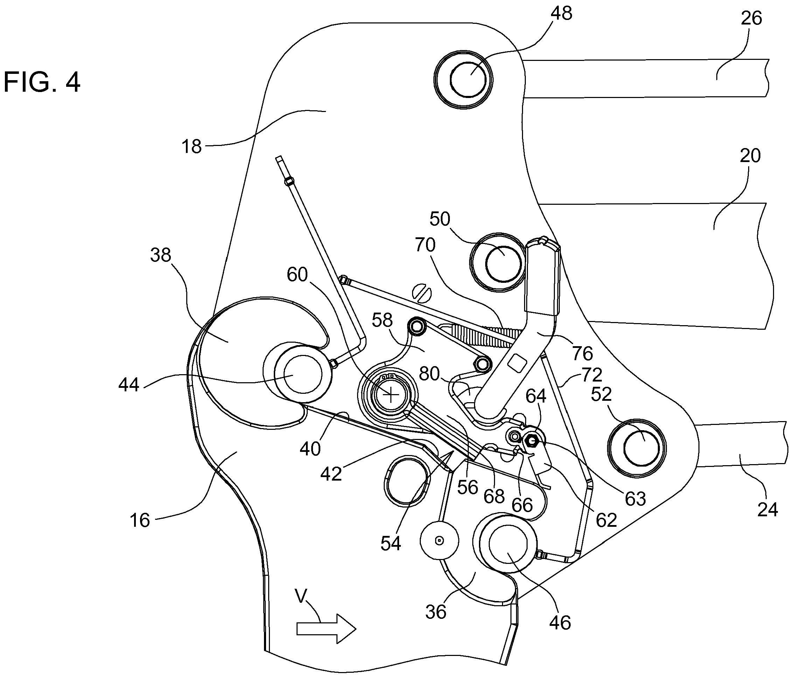

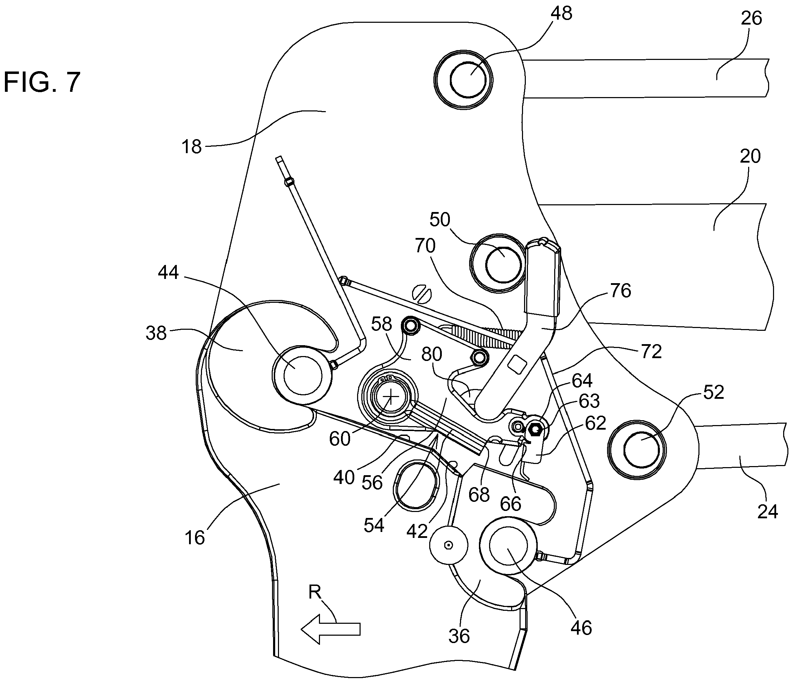

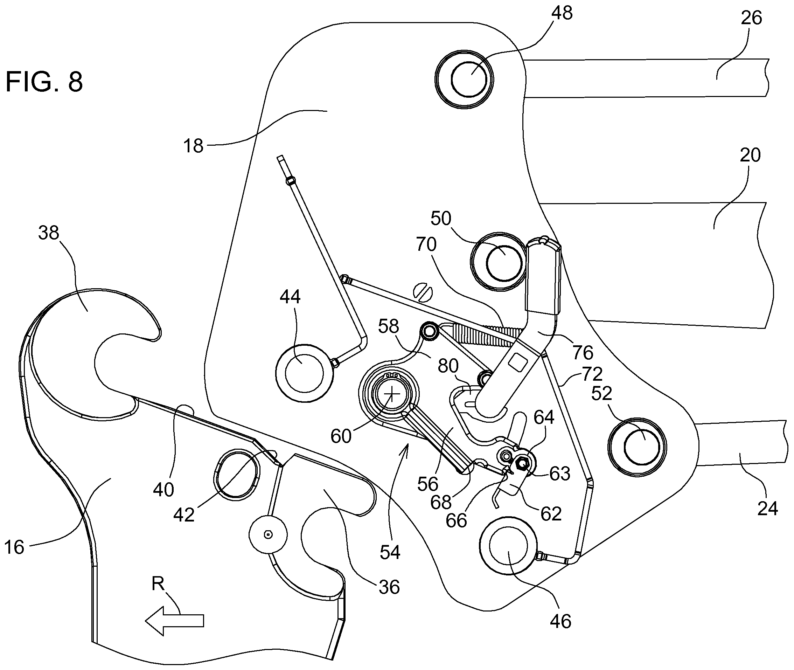

Ein Ankoppeln bzw. Abkoppeln des Frontladers 13 bzw. Des Anbaumasts 18 vom Anbaurahmen 16 wird wie folgt anhand der Figuren 2 bis 8 beschrieben. Der Anbaurahmen 16 wird aus einem abgekoppelten Zustand, in dem der Frontlader 13 abgestellt und von dem Schlepper hydraulisch und mechanisch getrennt ist, entsprechend der durch den Pfeil V angezeigten Bewegung in Richtung des Anbaumasts 18 bewegt (Figur 2). Der obere Lagerbolzen 44 beginnt mit der Rampe 40 in Eingriff zu treten und gleitet entlang der schiefen Ebene der Rampe 40 bzw. entlang der Rampenoberfläche hinauf, bis dieser mit dem oberen Fanghaken 38 in Eingriff tritt (Figuren 3 und 4). Gleichzeitig tritt der untere Lagerbolzen 46 mit dem unteren Fanghaken 36 in Eingriff (Figuren 3 und 4). Etwa zu dem Zeitpunkt, in dem die Lagerbolzen 44, 46 mit den Fanghaken 38, 36 in Eingriff treten (Figur 3) stößt der untere Fanghaken 36 bzw. ein unteres Ende der Rampe 40 gegen das Stützmittel 62 und beginnt dieses entgegen seiner Vorspannung aus seiner im Wesentlichen senkrecht zur Rampenoberfläche ausgerichteten Stellung, in der es die Stützposition oder Stützstellung einnimmt, in eine zunehmend ausgelenkte Stellung zu verschwenken (siehe Figuren 3 bis 5). Durch die Feder 70 am Schwenkriegel 54 wird dieser bei aufgehobener Stützstellung des Stützmittels 62 mit seinem unteren Schwenkarm 56 in Richtung der Rampenoberfläche bewegt, so dass schließlich der Absatz 68 des unteren Schwenkarms 56 auf der Rampe 40 zur Anlage kommt und entlang der Rampe hinauf gleitet (Figuren 3 und 4). Wie in Figur 5 zu sehen, erreicht der Anbaumast 18 relativ zum Anbaurahmen 16 eine Endstellung, in der die Lagerbolzen 44, 46 vollständig in den Fanghaken 38, 36 zur Anlage kommen. Gleichzeitig nimmt der federvorgespannte Schwenkriegel 54 seine Verriegelungsstellung ein und rastet mit dem am ersten Schwenkarm 56 ausgebildeten Absatz 68 in der Vertiefung 42 ein, so dass der Anbaumast 18 am Anbaurahmen 16 verriegelt wird, da eine Relativbewegung zwischen Anbaumast 18 und Anbaurahmen 16 nunmehr einerseits durch die Fanghaken und andererseits durch den in der Vertiefung 42 zur Anlage gekommenen Absatz 68 blockiert wird. Der Frontlader ist nun in Betriebsstellung und kann in Betrieb genommen werden. Figuren 6 bis 8 zeigen die Entriegelung des Frontladers, also das Abkoppeln des Anbaumasts 18 vom Anbaurahmen 16. Der Schwenkriegel 54 wird dabei mittels des Betätigungselements 74 wie oben beschrieben aus seiner Verriegelungsstellung in eine Entriegelungsstellung gebracht (Figur 6). Sogleich kann dadurch das federvorgespannte Stützmittel 62 seine Stützstellung einnehmen und der Schwenkriegel 54 vom Betätigungselement 74 wieder frei gegeben werden, indem der Betätigungshebel wieder in seine Grundstellung gebracht wird. Der Schwenkriegel 54 wird jetzt durch das Stützmittel 62 in der Entriegelungsstellung gehalten. Der Anbaumast 18 ist in diesem Zustand vom Anbaurahmen 16 entriegelt, so dass der Anbaurahmen 18 vom Anbaumast 18 entfernt werden kann, wie durch den Pfeil R in den Figuren 7 und 8 angedeutet ist. Durch die Relativbewegung zwischen Anbaumast 18 und Anbaurahmen 16 und das Entlanggleiten des Stützmittels 62 auf der Rampenoberfläche, wird das Stützmittel 62 gegen die Stirnfläche 66 des Schwenkarms 56 gedrängt, wodurch es seine Stützstellung beibehält und der Schwenkriegel 54 nicht zurück in die Vertiefung einschnappen kann (Figur 7). Durch Abrücken des Anbaurahmens 16, d.h. durch Zurücksetzen des Schleppers 10, kann der Anbaurahmen 16 nun vom Anbaumast 18, d.h. vom Frontlader 13 entfernt werden, damit ist das Abkoppeln des Anbaumasts 18 vom Anbaurahmen 16 abgeschlossen (Figur 8). Damit der Frontlader 13 vollständig vom Schlepper 10 getrennt und entfern werden kann, muss zuvor die hydraulische Versorgung der Hubzylinder 24 abgekoppelt werden. Dies kann der Betreiber parallel zum Entriegeln des Schwenkriegels 54 vornehmen, d.h. in einem Arbeitsablauf werden der Schwenkriegel 54 entriegelt und die Hydraulikversorgung abgetrennt.

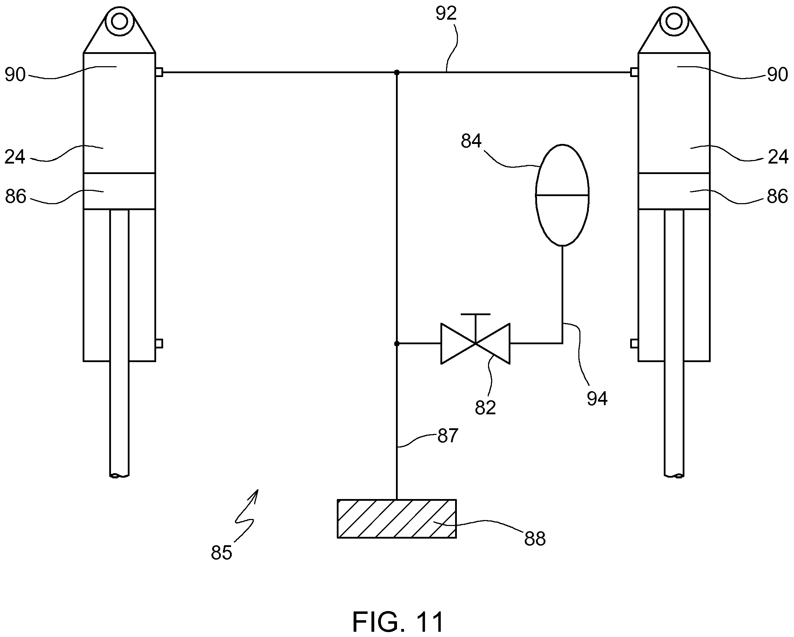

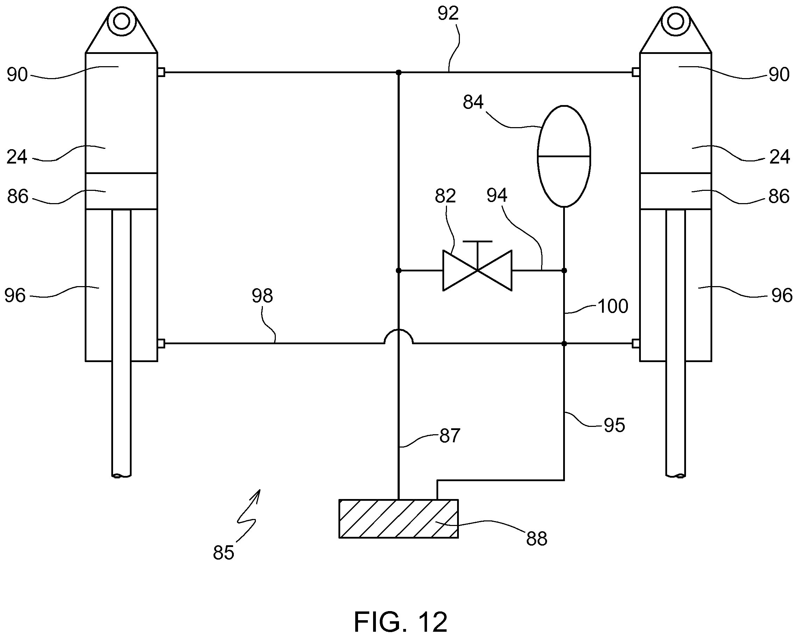

Um ein Ankoppeln zu erleichtern ist es sinnvoll, wie zuvor schon beschrieben wurde, dass der Anbaumast 18 sich beim Ankoppeln der Stellung des Anbaurahmens 16 möglichst frei anpassen kann, so dass die Lagerbolzen 44, 46 möglichst genau und präzise in die Fanghaken geführt werden. Dies wird dadurch erreicht, dass die starre Verbindung zwischen Anbaumast 18 und Laderschwinge 20, in der die Hubzylinder bei abgetrennter hydraulischer Versorgung in ihrer zuletzt eingenommenen Stellung verharren und den Anbaumast 18 starr zur Laderschwinge 20 halten, aufgehoben wird. Der Anbaumast 18 wird dadurch in einen beweglichen Zustand verbracht, in welchem er relativ zur Laderschwinge 20 verschwenkbar ist. Dazu ist, wie die Figuren 11 und 12 schematisch zeigen, ein Absperrventil 82 und ein Hydraulikspeicher 84 vorgesehen, wobei in Figur 11 eine hydraulische Schaltung für einen einfach wirkenden und in Figur 12 eine hydraulische Schaltung für einen doppelt wirkenden Hubzylinder dargestellt ist. In beiden Fällen ist das Absperrventil 82 manuell betätigbar ausgebildet und kann von einer Bedienperson, beim Ankoppeln und Abkoppeln des Frontladers 13 betätigt werden, wenn die Hydraulikversorgung angeschlossen bzw. abgetrennt wird.

In Bezug auf Figur 11 ist ein Teil eines hydraulischen Systems 85 zur hydraulischen Versorgung von zwei einseitig wirkenden Hubzylindern 24 abgebildet, die einen Kolben 86 aufweisen und über eine hydraulische Versorgungsleitung 87 hydraulisch versorgt werden, wobei sich die Versorgungsleitung 87 von einem Kupplungsteil 88 eines hydraulischen Schnellkupplers (nicht gezeigt) zu kolbenbodenseitigen Kammern 90 der Hubzylinder 24 erstreckt. Wie in Figur 1 zu erkennen ist, sind die Hubzylinder 24 kolbenbodenseitig mit der Laderschwinge 20 und kolbenstangenseitig mit dem Anbaumast 18 verbunden, so dass durch hydraulisches Befüllen der kolbenbodenseitigen Kammern 90 die Laderschwinge 20 angehoben werden kann. Ein Absenken der Laderschwinge 20 erfolgt dabei schwerkraftbedingt, wobei eine entsprechende Ansteuerung eines Steuerventils (nicht gezeigt) des hydraulischen Systems 85 zum Heben und Senken des Frontladers erfolgt und durch das Eigengewicht des Frontladers das Hydrauliköl aus den kolbenbodenseitigen Kammern 90 gedrückt werden kann. Die beiden Hubzylinder 24 sind ferner durch eine Verbindungsleitung 92 miteinander und mit der Versorgungsleitung 87 verbunden, so beide Hubzylinder 24 gleichermaßen druckbeaufschlagt werden. Das Absperrventil 82 ist in einer Verbindungsleitung 94 angeordnet, welche die Versorgungsleitung 87 mit dem Hydraulikspeicher 84 verbindet. Durch Öffnen des Absperrventils 82 wird gewährleistet, dass bei abgekoppelter hydraulischer Versorgung die Hydraulikflüssigkeit nicht in den kolbenbodenseitigen Kammern 90 gefangen ist, sondern in den Hydraulikspeicher 84 entweichen kann, und umgekehrt. Dadurch können die Hubzylinder 24 eine Schwimmstellung einnehmen, in der die Kolben 86 frei bewegbar sind. Dieser Zustand wiederum ermöglicht eine relativ freie Bewegung des Anbaumast 18 gegenüber der Laderschwinge 20, so dass sich der Anbaumast 18 bei geöffnetem Absperrventil 82 frei verschwenkbar beim Ankoppeln ausrichten lässt. Das Öffnen des Absperrventils 82 erfolgt bereits idealerweise beim Abkoppeln des Frontladers 13 und kann so in einem Arbeitsablauf mit einem Entriegeln des Schwenkriegels 54 und dem Trennen der hydraulischen Versorgung (Trennen des Schnellkopplers) durch eine Bedienperson vorgenommen werden. Dadurch, dass das Öffnen des Absperrventils 82 bereits beim Abkoppeln des Frontladers 13 erfolgt, ist dieser bereits für den nächsten Ankoppelvorgang vorbereitet, so dass ein Bediener ohne den Schlepper 10 zu verlassen den Frontlader 13 mit frei beweglichem Anbaumast 18 ankoppeln kann. Nach dem Ankoppeln des Frontladers 13 muss bei Inbetriebnahme der hydraulischen Funktion (Anschließen der hydraulischen Versorgung) das Absperrventil geschlossen werden, um einen hydraulischen Betrieb des Frontladers 13 zu gewährleisten. Dies kann ebenfalls in einem Arbeitsablauf mit dem Verbinden des Schnellkopplers erfolgen.

In Bezug auf Figur 12 ist ein Teil eines hydraulischen Systems 85 zur hydraulischen Versorgung von zwei doppelt wirkenden Hubzylindern 24 abgebildet, die einen Kolben 86 aufweisen und über eine hydraulische Versorgungsleitung 87 und eine hydraulische Versorgungsleitung 95 hydraulisch versorgt werden. Die Versorgungsleitung 87 erstreckt sich von einem Kupplungsteil 88 eines hydraulischen Schnellkupplers (nicht gezeigt) zu kolbenbodenseitigen Kammern 90 der Hubzylinder 24, wobei sich die Versorgungsleitung 95 vom Kupplungsteil 88 zu kolbenstangenseitigen Kammern 96 erstreckt. Wie in Figur 1 zu erkennen ist, sind die Hubzylinder 24 kolbenbodenseitig mit der Laderschwinge 20 und kolbenstangenseitig mit dem Anbaumast 18 verbunden, so dass durch hydraulisches Befüllen der kolbenbodenseitigen Kammern 90 die Laderschwinge 20 angehoben und abgesenkt, wobei auf bekannte Weise eine entsprechende Ansteuerung eines Steuerventils (nicht gezeigt) des hydraulischen Systems 85 zum Heben und Senken des Frontladers erfolgt. Die beiden Hubzylinder 24 sind kolbenbodenseitig durch eine Verbindungsleitung 92 miteinander und mit der Versorgungsleitung 87 verbunden. Ferner sind die Hubzylinder 24 kolbenstangenseitig durch eine Verbindungsleitung 98 miteinander und mit der Versorgungsleitung 95 verbunden. Beide Hydraulikzylinder 24 werden dadurch gleichermaßen druckbeaufschlagt. Der Hydraulikspeicher 84 ist über eine Verbindungsleitung 100 mit der Versorgungsleitung 95 und damit auch mit der Verbindungsleitung 98 und den kolbenstangenseitigen Kammern 96 verbunden. Das Absperrventil 82 ist in einer Verbindungsleitung 94 angeordnet, welche die Versorgungsleitung 87 mit der Versorgungsleitung 100 verbindet. Durch Öffnen des Absperrventils 82 wird gewährleistet, dass bei abgekoppelter hydraulischer Versorgung die Hydraulikflüssigkeit nicht in den Kammern 90, 96 gefangen ist, sondern in den Hydraulikspeicher 84 und in die jeweilige andere Kammer 90, 96 entweichen kann, und umgekehrt. Dadurch können die Hubzylinder 24 eine Schwimmstellung einnehmen, in der die Kolben 86 frei bewegbar sind, wobei Volumenunterschiede zwischen den kolbenbodenseitigen Kammern 90 und den kolbenstangenseitigen Kammern 96 durch den Hydraulikspeicher 84 kompensiert werden. Dieser Zustand wiederum ermöglicht eine relativ freie Bewegung des Anbaumast 18 gegenüber der Laderschwinge 20, so dass sich der Anbaumast 18 bei geöffnetem Absperrventil 82 frei verschwenkbar beim Ankoppeln ausrichten lässt. Das Öffnen des Absperrventils 82 beim Abkoppeln des Frontladers 13 kann dabei in einem Arbeitsablauf mit einem Entriegeln des Schwenkriegels 54 und dem Trennen der hydraulischen Versorgung (Trennen des Schnellkopplers) durch eine Bedienperson vorgenommen werden. Dadurch, dass das Öffnen des Absperrventils 82 bereits beim Abkoppeln des Frontladers 13 erfolgt, ist dieser auch hier bereits für den nächsten Ankoppelvorgang vorbereitet, so dass ein Bediener ohne den Schlepper 10 zu verlassen den Frontlader 13 mit frei beweglichem Anbaumast 18 ankoppeln kann. Auch hier muss nach dem Ankoppeln des Frontladers 13 bei Inbetriebnahme der hydraulischen Funktion (Anschließen der hydraulischen Versorgung) das Absperrventil geschlossen werden, um einen hydraulischen Betrieb des Frontladers 13 zu gewährleisten. Dies kann jedoch ebenfalls in einem Arbeitsablauf mit dem Verbinden des Schnellkopplers erfolgen.

## Patentansprüche

1. Frontladeranordnung (12) mit einem Anbaurahmen (16) und einem Anbaumast (18), wobei der Anbaumast (18) an den Anbaurahmen (16) ankoppelbar und von diesem abkoppelbar ist, eine mit dem Anbaumast (18) verbundene Laderschwinge (20), welche über einen sich zwischen Laderschwinge (20) und Anbaumast (18) erstreckenden Hydraulikzylinder (24) verschwenkbar ist, **dadurch gekennzeichnet, dass** an der Frontladeranordnung (12) Stellmittel vorgesehen sind, durch welche der Hydraulikzylinder (24) bei abgekoppelter hydraulischer Versorgung in eine Schwimmstellung bringbar ist.

2. Frontladeranordnung (12) nach Anspruch 1, **dadurch gekennzeichnet, dass** die Stellmittel einen Hydraulikspeicher (84) und ein Absperrventil (82) umfassen, über welches der Hydraulikzylinder (24) mit einer kolbenbodenseitigen Kammer (90) hydraulisch mit dem Hydraulikspeicher (84) verbindbar ist.

3. Frontladeranordnung (12) nach Anspruch 1 oder 2, **dadurch gekennzeichnet, dass** der Hydraulikzylinder (24) doppeltwirkend mit einer kolbenstangenseitigen und einer kolbenbodenseitigen Kammer (90, 96) ausgebildet ist, wobei das Absperrventil (82) zwischen den beiden Kammern (90, 96) und der Hydraulikspeicher (84) zwischen dem Absperrventil (82) und der kolbenstangenseitigen Kammer (96) angeordnet ist.

4. Landwirtschaftliches Fahrzeug (10) mit einer Frontladeranordnung (12) nach einem der Ansprüche 1 bis 3.

## Claims

1. Front loader arrangement (12) with a mounting frame (16) and a mounting mast (18), wherein the mounting mast (18) can be coupled to the mounting frame (16) and can be decoupled therefrom, and a loader arm (20) which is connected to the mounting mast (18) and is pivotable via a hydraulic cylinder (24) extending between loader arm (20) and mounting mast (18), **characterized in that** adjusting means, by means of which the hydraulic cylinder (24) can be brought into a floating position when the hydraulic supply is decoupled, are provided on the front loader arrangement (12).

2. Front loader arrangement (12) according to Claim 1, **characterized in that** the adjusting means comprise a hydraulic accumulator (84) and a shut-off valve (82) via which the hydraulic cylinder (24) is hydraulically connectable to a piston-head-side chamber (90) by the hydraulic accumulator (84).

3. Front loader arrangement (12) according to Claim 1 or 2, **characterized in that** the hydraulic cylinder (24) is formed in a double-acting manner with a piston-rod-side and a piston-head-side chamber (90, 96), wherein the shut-off valve (82) is arranged between the two chambers (90, 96) and the hydraulic accumulator (84) is arranged between the shut-off valve (82) and the piston-rod-side chamber (96).

4. Agricultural vehicle (10) with a front loader arrangement (12) according to one of Claims 1 to 3.

## Revendications

1. Agencement à chargeur frontal (12) avec un cadre rapporté (16) et un mât rapporté (18), le mât rapporté (18) pouvant être couplé au cadre rapporté (16) et être découplé de lui, une coulisse de chargeur (20) reliée au mât rapporté (18) et pouvant pivoter via un vérin hydraulique (24) s'étendant entre la coulisse de chargeur (20) et le mât rapporté (18), **caractérisé en ce que** des moyens de réglage sont prévus au niveau de l'agencement à chargeur frontal (12) à travers lesquels le vérin hydraulique (24) peut être amené dans une position flottante lorsque l'alimentation hydraulique est découplée.

2. Agencement à chargeur frontal (12) selon la revendication 1, **caractérisé en ce que** les moyens de réglage comprennent un accumulateur hydraulique (84) et une soupape de déblocage (82) via laquelle le vérin hydraulique (24) doté d'une chambre (90) située du côté de fond de piston peut être relié de façon hydraulique à l'accumulateur hydraulique (84).

3. Agencement à chargeur frontal (12) selon la revendication 1 ou 2, **caractérisé en ce que** le vérin hydraulique (24) est réalisé avec une double action avec une chambre (90, 96) située du côté de tige de piston et située du côté de fond de piston, la soupape de déblocage (82) étant disposée entre les deux chambres (90, 96) et l'accumulateur hydraulique (84) prévu entre la soupape de déblocage (82) et la chambre (96) située du côté de tige de piston.

4. Véhicule agricole (10) doté d'un agencement à chargeur frontal (12) selon l'une quelconque des revendications 1 à 3.
